# FASCICULE DE BREVET EUROPEEN

(11) **EP 0 769 434 B1**
(45) Date de publication et mention de la délivrance du brevet: **23.02.2000**
(21) Numéro de dépôt: 96402223.0
(22) Date de dépôt: 18.10.1996
(51) Int. Cl.: B60R 25/02

(54) **Dispositif de verrouillage de colonne de direction**
Lenkungsverriegelungsvorrichtung
Steering locking apparatus

(30) Priorité: 20.10.1995 FR 9512342
(43) Date de publication de la demande: 23.04.1997
(73) Titulaire: RENAULT, 92109 Boulogne-Billancourt (FR)
(72) Inventeur: Broqua, Frédéric, 75017 Paris (FR)

(56) Documents cités:
- EP-A- 0 314 143
- WO-A-93/13967
- WO-A-95/13205
- DE-A- 4 314 854
- FR-A- 2 589 930
- GB-A- 2 169 651
- GB-A- 2 208 678
- US-A- 4 426 864
- US-A- 4 716 748
- US-A- 5 255 547
- PATENT ABSTRACTS OF JAPAN vol. 13, no. 535 (M-899), 29 Novembre 1989 & JP-A-01 218942 (TOSHIBA), 1 Septembre 1989,
- PATENT ABSTRACTS OF JAPAN vol. 16, no. 484 (M-1322), 7 Octobre 1992 & JP-A-04 176760 (YUHSHIN), 24 Juin 1992,

## Description

La présente invention se rapporte à un dispositif de verrouillage pour colonne de direction, selon le préambule de la revendication 1.

Un tel dispositif est connu de la publication US-A-4,716,748, dans laquelle la clef est amovible.

Selon la disposition la plus courante, le barillet d'un dispositif de verrouillage de colonne de direction peut toujours se déplacer, sous l'action de la clef, entre deux positions matérialisées par des repères tels que "stop" et "contact on". La rotation du barillet entre la position stop et la position "contact on", obtenue par le simple actionnement de la clef, permet donc en toutes circonstances de retirer le pêne à l'écart de la colonne de direction afin de libérer cette dernière.

Un autre système de verrouillage connu, illustré notamment par la publication FR 2.611.625, repose sur le découplage du verrou et de la clef. Cette publication décrit notamment un dispositif de verrouillage de colonne de direction, selon lequel le pêne assurant le blocage de la colonne n'est plus actionné directement par la rotation de la clef de contact, mais la rotation de celle-ci permet simplement de fermer un interrupteur électrique, qui commande un électro-aimant d'actionnement du pêne, uniquement si l'utilisateur est reconnu par le système.

Dans le cas particulier d'une flotte de véhicule accessibles à un groupe d'individus déterminé, par exemple une flotte de véhicules dits "en libre service", utilisables exclusivement et indifféremment par une population d'abonnées, le problème se pose de faciliter l'accès de chaque véhicule de la flotte à l'ensemble des abonnés, tout en protégeant efficacement les véhicules en question contre le vol.

La présente invention vise à apporter une solution appropriée au problème exposé ci-dessus.

Elle concerne un dispositif de verrouillage pour colonne de direction, notamment pour véhicule automobile comme revendiqué dans la revendication 1.

Il est observé que le document EP-A-0 314 143 décrit un dispositif de verrouillage de divers appareils dans une véhicule, comportant une clef que est amovible lorsque un code unique soit entrée dans une unité d'identification de l'utilisateur.

Selon un mode de réalisation particulier de l'invention, l'unité d'identification est un lecteur de carte électronique.

D'autres caractéristiques et avantages de l'invention apparaîtront clairement à la lecture de la description suivante d'un mode de réalisation particulier de celle-ci, en se référant aux dessins annexés, sur lesquels :
- les figures 1 à 6 illustrent le fonctionnement du dispositif proposé par l'invention.

Le dispositif de verrouillage de colonne de direction apparaissant sur les schémas comporte un verrou 1 renfermant un barillet 3 dans lequel est insérée une clef de contact 2 assurant la rotation du barillet 3 entre une première position ou position de verrouillage (cf figures 1, 2, 3, 6) dans laquelle un pêne 4 est engagé à l'intérieur d'une fente 6 de la colonne 5, et une seconde position, ou position de déverrouillage (cf figure 4 et 5), dans laquelle le pêne 4 est dégagé de la fente 6.

Conformément à l'invention, la clef de contact 2 est inamovible dans le barillet 3, de sorte qu'elle n'est retirée en aucune circonstance par l'utilisateur. Le verrou 1 et par ailleurs muni de moyens de blocage 7, de préférence électromécaniques, capables d'empêcher la rotation de l'ensemble clef-barillet, ainsi que la translation du pêne 4. Les moyens de bocage 7 sont contrôlés par une unité de lecture 9 de carte électronique 10, permettant d'identifier le conducteur. L'unité d'identification 9, pourvue d'une fente de lecture non représentée et de moyens d'immobilisation 11 de la carte 10, est reliée par voie électrique ou électronique 8, aux moyens de blocage 7.

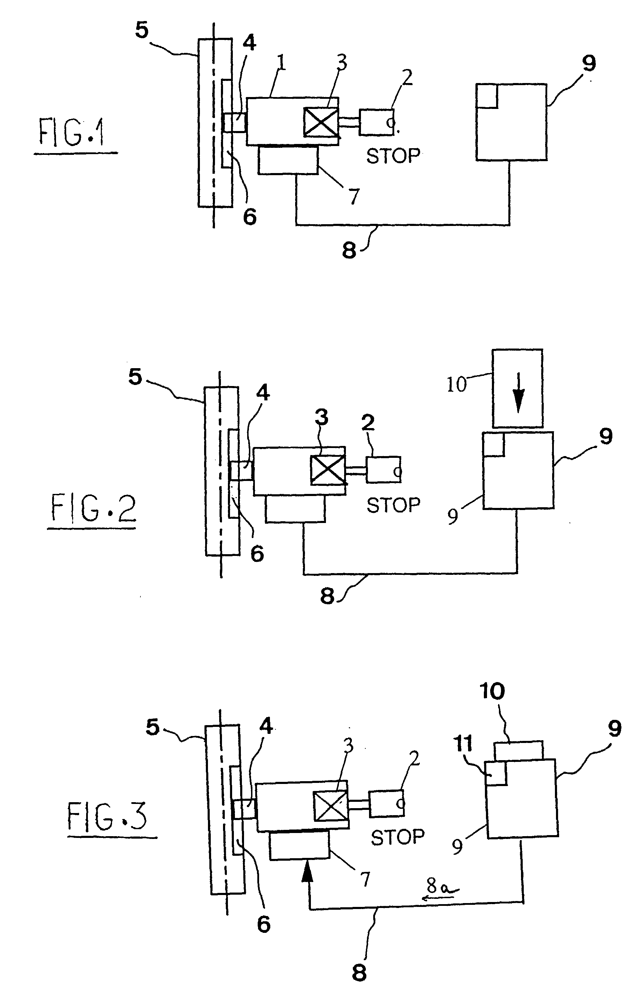

Le fonctionnement de ce dispositif est le suivant. En situation de repos (cf figure 1), le pêne 4 est engagé dans la fente 6 et les moyens de blocage 7 immobilisent la clef 2 et le barillet 3 vis-à-vis du verrou 1, de sorte que la clef 2, ne peut être tournée par l'utilisateur.

Lorsque l'utilisateur insère sa carte 10 dans l'unité 9 (cf figure 2), la carte 10 est identifiée par l'unité 9, le cas échéant après composition d'un code confidentiel.

Si la carte 10 est identifiée, l'unité 9 envoie un signal de déverrouillage 8a aux moyens de blocage 7 (cf figure 3). L'utilisateur a alors la possibilité de faire tourner le barillet 3 à l'aide de la clef 2, de façon à dégager le pêne 4 de la fente 6. Lorsque la clef 2 est effectivement tournée par l'utilisateur, l'unité 9 reçoit des moyens de blocage 7, un ordre 8b, d'immobilisation de la carte 10 par les moyens d'immobilisation 11.

Arrivé à destination, l'utilisateur coupe le contact en tournant la clef 2 en sens inverse (cf figure 5). Cette opération se traduit par l'envoi d'un signal de libération 8c par les moyens de blocage 7 en direction de l'unité 9, ce signal 8c permettant le dégagement de la carte 10 vis-à-vis des moyens d'immobilisation 11, tandis que le pêne 4 reste à l'écart de la fente 6, de sorte que la colonne 5 est toujours déverrouillée.

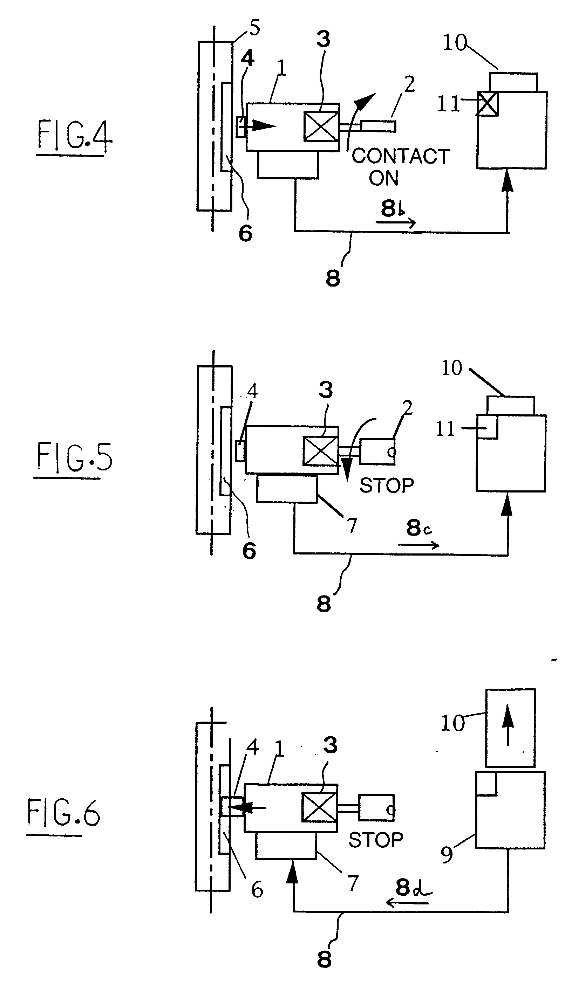

Conformément à l'invention, le verrouillage de la colonne 5 n'intervient que lorsque l'utilisateur retire sa carte 10 de l'unité 9 (cf figure 6). Cette dernière opération déclenche l'envoi d'un signal 8d de libération du pêne 4, en direction des moyens de blocage 7 et du verrou 1, et le retour du dispositif dans sa position de repos (cf figure 1), correspondant au verrouillage de la colonne 5.

Le dispositif de verrouillage de colonne de direction proposé par l'invention présente de nombreux avantages. Parmi ceux-ci, il faut noter qu'il permet à un ensemble d'utilisateurs potentiels munis d'une carte personnelle d'identification, d'avoir accès à plusieurs véhicules, sans pour autant disposer de la clef de chacun d'eux.

## Revendications

1. Dispositif de verrouillage pour colonne de direction (5) notamment pour véhicule automobile, ledit dispositif comportant un verrou (1) muni d'un barillet d'entraînement (3) d'un pêne de verrouillage (4) de la colonne (5), solidaire en rotation d'une clef (2) d'actionnement déplaçable par l'utilisateur entre deux positions dans lesquelles le pêne (4) est respectivement engagé à l'intérieur de la colonne (5) ou dégagé de celle-ci, et comportant des moyens de blocage (7) du barillet (3), placés sous le contrôle d'une unité d'identification (9) de l'utilisateur caractérisé en ce que la clef (2) est inamovible.

2. Dispositif de verrouillage selon la revendication 1, caractérisé en ce que l'unité d'identification (3) est un lecteur de carte électronique (10).

3. Dispositif de verrouillage selon la revendication 1 ou 2, caractérisé en ce que l'actionnement de la clef (2) n'est autorisé que lorsque l'utilisateur est identifié.

4. Dispositif de verrouillage selon la revendication 1, 2 ou 3, caractérisé en ce que l'actionnement de la clef (2) entraîne l'immobilisation de la carte (10) électronique dans l'unité d'identification (9).

5. Dispositif de verrouillage selon l'une des revendications précédentes, caractérisé en ce que la carte (10) est identifiée après composition d'un code confidentiel par l'utilisateur.

6. Dispositif de verrouillage selon la revendication 4 ou 5, caractérisé en ce que le pêne (4) est maintenu à l'écart de la colonne de direction (5) par les moyens de blocage (7) tant que l'utilisateur n'a pas retiré sa carte (10) de l'unité d'identification (9).

## Patentansprüche

1. Vorrichtung zur Verriegelung der Lenksäule (5) insbesondere eines Kraftfahrzeuges, wobei die Vorrichtung einen Riegel (1) aufweist, der mit einem Schließzylinder (3) für einen Verriegelungsbolzen (4) der Lenksäule (5) versehen ist und drehfest mit einem Betätigungsschlüssel (2) verbunden ist, der vom Benutzer zwischen zwei Stellungen verschiebbar ist, in denen der Bolzen (4) mit der Lenksäule (5) im Eingriff bzw. außer Eingriff ist und die eine Blockieranordnung (7) für den Schließzylinder 3 aufweist, die von einem Erkennungsgerät (9) für den Benutzer ansteuerbar ist, dadurch gekennzeichnet, dass der Schlüssel (2) nicht abziehbar ist.

2. Vorrichtung zur Verriegelung nach Anspruch 1, dadurch gekennzeichnet, dass die Erkennungseinheit (3) ein elektronischer Kartenleser (10) ist.

3. Vorrichtung zur Verriegelung nach Ansprüchen 1 oder 2, dadurch gekennzeichnet, dass die Betätigung des Schlüssels (2) nur möglicht ist, wenn der Benutzer identifiert worden ist.

4. Vorrichtung zur Verriegelung nach Ansprüchen 1, 2 oder 3, dadurch gekennzeichnet, dass die Betätigung des Schlüssels (2) eine Feststellung der elektronischen Karte (10) in der Erkennungseinheit (9) bewirkt.

5. Vorrichtung zur Verriegelung nach einem der vorhergehenden Ansprüche, dadurch gekennzeichnet, dass die Karte (10) nach Eingabe eines persönlichen Codes durch den Benutzer identifizierbar ist.

6. Vorrichtung zur Verriegelung nach Anspruch 4 oder 5, dadurch gekennzeichnet, dass der Bolzen (4) außer Eingriff mit der Lenksäule (5) durch eine Blockieranordnung (7) gehalten wird, solange der Benutzer seine Karte (10) nicht aus der Erkennungseinheit (9) entnommen hat.

## Claims

1. A locking device for a steering column (5), in particular for a motor vehicle, said device comprising a lock (1) provided with a barrel (3) for entraining a bolt (4) for locking the column (5), being fixed in respect of rotation with an actuating key (2) displaceable by the user between two positions in which the bolt (4) is respectively engaged in the interior of the column (5) or disengaged therefrom, and comprising means (7) for blocking the barrel (3), which are under the control of a user identification unit (9), characterised in that the key (2) is non-removable.

2. A locking device according to claim 1 characterised in that the identification unit (3) is an electronic card reader (10).

3. A locking device according to claim 1 or claim 2 characterised in that actuation of the key (2) is authorised only when the user is identified.

4. A locking device according to claim 1, claim 2 or claim 3 characterised in that actuation of the key (2) causes immobilisation of the electronic card (10) in the identification unit (9).

5. A locking device according to one of the preceding claims characterised in that the card (10) is identified after composition of a confidential code by the user.

6. A locking device according to claim 4 or claim 5 characterised in that the bolt (4) is held away from the steering column (5) by the blocking means (7) as long as the user has not withdrawn his card (10) from the identification unit (9).
